# EUROPEAN PATENT APPLICATION

(11) **EP 4 663 006 A1**
(43) Date of publication of application: **17.12.2025**
(21) Application number: 24182329.3
(22) Date of filing: 14.06.2024
(51) Int. Cl.: A01G 9/14, E04D 1/36, E04D 3/06

(54) **PROFILE WITH MODULAR SNAP-FIT INTEGRATED FASTENING SEALING MECHANISM BETWEEN SIDEWALLS AND ROOF MODULES FOR GREENHOUSES**

(71) Applicant: UAB Gampre, 11119 Vilnius (LT)
(72) Inventor: Simonavicius, Gintas, Vilnius (LT)
(74) Representative: Metida

(57) **Abstract**

The core inventive advance is a profile structure (1) used to connect the walls and roof of a greenhouse. This profile (1) consists of two parts: a base element (3) installed inside the greenhouse, and a fastening component (2) located outside the greenhouse. The fastening component (2) is secured into the base element (3) using a snap-fit mechanism. The base element (3) has a curved shape designed to fit the transition between the wall and roof of the greenhouse: one part of the base element (3) is positioned against the roof, and the other part against the wall, ensuring stability and durability. The fastening component (2), which includes locking and latching functions, is designed to securely attach to the base element (3) from the outside of the greenhouse without requiring additional tools or fasteners. The present invention produces a technical effect that allows the base element (3) and the fastening component (2) to be quickly and securely joined together while ensuring that they are difficult to separate unintentionally. The profile design effectively withstands external environmental influences, such as wind and rain, while maintaining the stability and reliability of the greenhouse structure.

## Description

### FIELD OF THE INVENTION

The present invention relates to greenhouse technologies and aims to enhance the reliability and robustness of structural connections. It describes the creation of a modular snap-fit integrated fastening sealing mechanism for efficiently connecting roofs and side walls. The design allows for quick and secure connection of individual structures while providing excellent resistance to adverse weather conditions like strong winds or rain. This ultimately increases the stability and durability of the entire greenhouse structure.

### BACKGROUND OF THE INVENTION

Greenhouses are crucial for the global food supply chain, as they ensure consistent production of vegetables, fruits, and other crops throughout the year. Given the changing climate and a growing global population, greenhouses are becoming more critical in retaining food security and accessibility. Therefore, it is essential to continually improve greenhouse structures, both technologically and environmentally. Modernizing greenhouses can enhance efficiency, reduce resource consumption, and create better conditions for plant production, thus also contributing to energy savings and reduced greenhouse gas emissions. These improvements are vital for sustainable and responsible agricultural development, as well as for building resilience to environmental challenges.

The sustainability and durability of greenhouses are crucial for long-term and efficient plant and food production. The reliability and resistance of the entire greenhouse structure to adverse weather conditions such as strong winds, frost, snow or rain depend on the reinforcing structural elements applied. Unique joint profiles that connect various structural parts can reduce the risk of cracks and leaks, ensuring an optimal environment for plant production. In addition, these joint profiles can save energy by retaining more heat and reducing heating demand in colder seasons. Refining greenhouse profiles and other structural components can significantly enhance efficiency and sustainability, thereby contributing to the sustainable development of agriculture.

An existing problem in the greenhouse sector is the lack of efficient and reliable roof-to-wall joining technology. Although greenhouses are integral to global food production, their construction technology does not always meet high efficiency and sustainability standards. In the present invention, we will focus on the interconnection between the roof and the walls, as the incorrect connection between these two key greenhouse structure elements can lead to significant energy losses and reduce the resistance of the structure to negative externalities. Currently, the market lacks innovative solutions that can ensure a strong and tight connection between the walls and the roof, which is essential to ensure maximum structural integrity and minimise heat loss. Therefore, there is a need to develop new design solutions that effectively address these challenges and increase the efficiency and sustainability of greenhouses in the long term.

When reviewing the current state of the art, we came across several relevant documents. Application No CN101824858(A), published on 8 September 2010, describes a long-joint roof structure for a greenhouse that holds glass and uses integrated connectors with upper and lower cross bars. In contrast, our proposed design features a modular snap-fit profile that allows for quick and efficient connection of greenhouse roof and wall components. It is optimized for a sustainable and reliable greenhouse environment, unlike the design in CN101824858(A), which focuses more on addressing roof length and water leakage issues.

Another relevant document is application No CN219834950(U), published on 17 October 2023. It describes a glass greenhouse roof connection assembly with a complex structure of bolted components for ensuring the stability of the roof profiles. It also relies on mechanical connectors that require complex assembly using tools. In contrast, our invention features a snap-fit profile that enables quick and tool-free joining of greenhouse roof and wall components, while still ensuring structural robustness and durability.

Application No ES224287(U), published on 1 February 1977, describes a fastening device for joining plastic sheeting for greenhouses using mechanical clamping of two (U- and V-shaped) profiles. The described method and design focus on joining flexible materials rather than rigid structural elements.

The document most conceptually similar to our invention is application No CN219622116(U), published on 1 September 2023. It describes a highly complex and technically sophisticated roof support profile system for supporting and stabilizing the glass roof of the greenhouse, constructed with reinforcing shields and mounting grooves to provide better support for the glass roof and ensure its stability. However, the solution is highly complex and lacks a snap-fit element.

To summarise, upon reviewing the existing state of the art documents, it was established that there are no existing structures that are easy to install, have a uniquely simple design, are equipped with a snap-fit mechanism, and provide a high level of robustness for the entire greenhouse in terms of the connection between the walls and roof. The designs described in the current patent database are often complex, require special tools for mounting, and are not optimized for efficient and user-friendly operation.

Our invention offers a specific snap-fit profile that is easy to install, uniquely simple, and modern in design. It provides excellent robustness, stability, and tightness. This profile is described in more detail below.

### SUMMARY OF THE INVENTION

The core inventive advance is a profile structure used to connect the walls and roof of a greenhouse. This profile consists of two parts: a base element installed inside the greenhouse, and a fastening component located outside the greenhouse. The fastening component is secured into the base element using a snap-fit mechanism.

The base element has a curved shape designed to fit the transition between the wall and roof of the greenhouse: one part of the base element is positioned against the roof, and the other part against the wall, ensuring stability and durability.

The fastening component, which includes locking and latching functions, is designed to securely attach to the base element from the outside of the greenhouse without requiring additional tools or fasteners.

The present invention produces a technical effect that allows the base element and the fastening component to be quickly and securely joined together while ensuring they are difficult to separate unintentionally.

The profile design effectively withstands external environmental influences, such as wind and rain, while maintaining the stability and reliability of the greenhouse structure.

### BRIEF DESCRIPTION OF THE DRAWINGS

Fig. 1 shows the structure of the invention profile (1), with the two main parts that are marked: the base element (3) and the fastening component (2).
Fig. 2 shows in more detail the base element (3) of the invention profile (1).
Fig. 3 shows the fastening component (2) of the invention profile in more detail (1).
Fig. 4 shows an example of a specific design implementation, including dimensions, where it is also possible to see how the roof and wall panel elements (15, 16) are integrated into the profile (1).

### MARKING OF THE DRAWINGS

1 - Structure of the invention profile (the profile).
2 - Fastening component.
3 - Base element.
4 - Housing of the base element.
5 - Locking knurl.
6 - Attachment hook.
7 - Stop for the attachment leg.
8 - Roof panel stop.
9 - Roof panel cavity.
10 - Wall panel cavity.
11 - Housing of the fastening component.
12 - Locking leg.
13 - Attachment leg.
14 - Roof panel support leg.
15 - Part of the wall panel / the wall panel.
16 - Part of the roof panel / the roof panel.

### PREFERRED EMBODIMENTS OF THE INVENTION / DETAILED DESCRIPTION OF THE INVENTION

Given the growing world population and the challenges of climate change, greenhouses are becoming more crucial for the future of agriculture and food production. They enable the control of the growing conditions for plants, vegetables, and fruits, ensuring efficient and consistent production regardless of the season or external weather conditions. Innovations in greenhouse technologies are essential for sustainable agriculture.

The core inventive advance of the present invention is a specially designed profile (1) for optimising the connection between the roof and the walls of a greenhouse. This design significantly enhances the strength and sealing of the greenhouse structure, while also reducing heat loss, resulting in more efficient energy use. These improvements contribute to sustainable agriculture by reducing resource consumption and environmental impact, leading to healthier and more nutritious products.

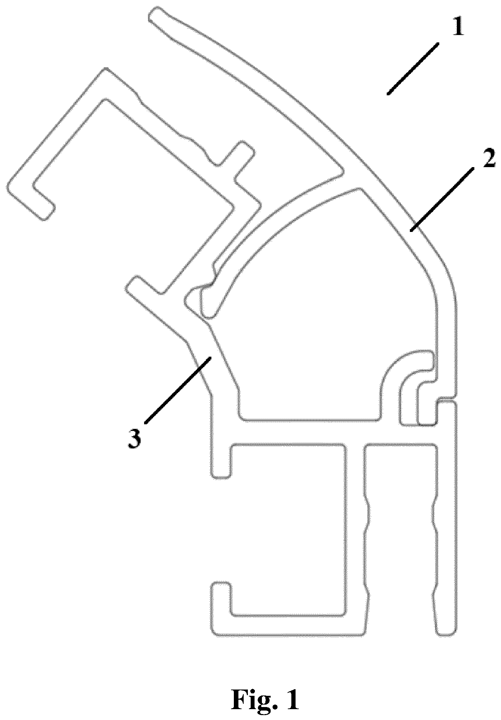

Fig. 1 shows the overall structure of the invention profile (1), showcasing the connection and fastening of the roof and the greenhouse wall. This profile consists of two main parts: the base element (3) and the fastening component (2). The base element (3) is fixed inside the greenhouse by creating a connection zone between the roof and the walls of the greenhouse and the fastening component (2). The fastening component (2) is the second part of the structure; it is connected to the base element (3) outside the greenhouse, using a snap-fit principle. The fastening component (2) ensures the stability, tightness and robustness of the profile and the whole greenhouse structure by quickly and firmly locking the whole structure and preventing it from accidentally or unintentionally unlocking.

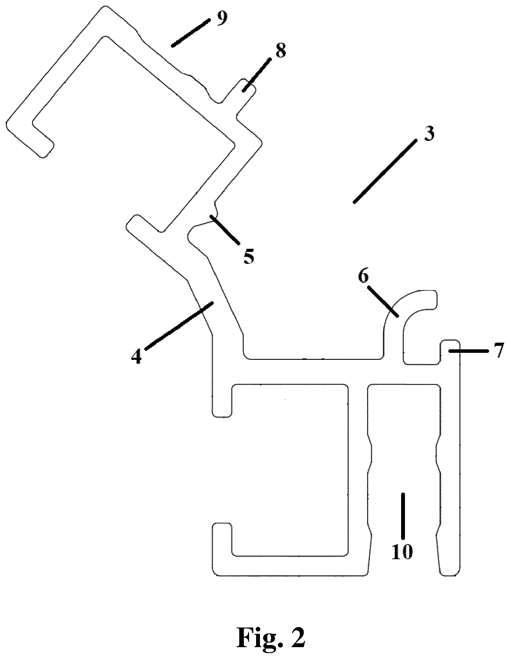

Fig. 2 shows the base element (3) of the invention profile (1) in more detail. It consists of the following parts: the housing of the base element (4), the locking knurl (5), the attachment hook (6), the stop of the attachment leg (7), the roof panel stop (8), the roof panel cavity (9), and wall panel cavity (10). In the implementation of the present invention, the critical parts of the base element (3) are the attachment hook (6) and the locking knurl (5).

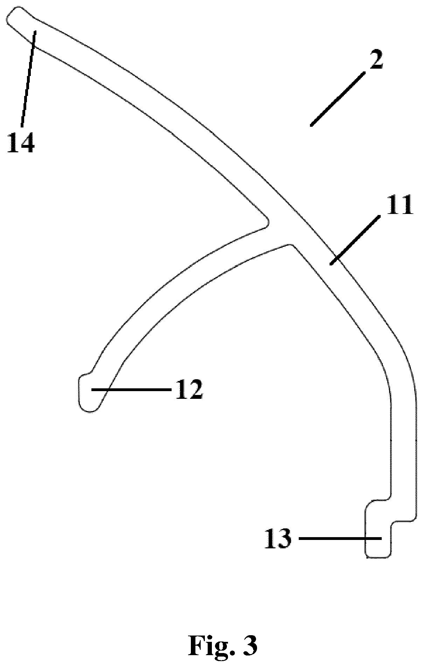

Fig. 3 shows the structure of the fastening component (2). It consists of the housing of the fastening component (11), the locking leg (12), the attachment leg (13), and the roof panel support leg (14). In the implementation of the present invention, the critical parts of the fastening component (2) are the locking leg (12) and the attachment leg (13).

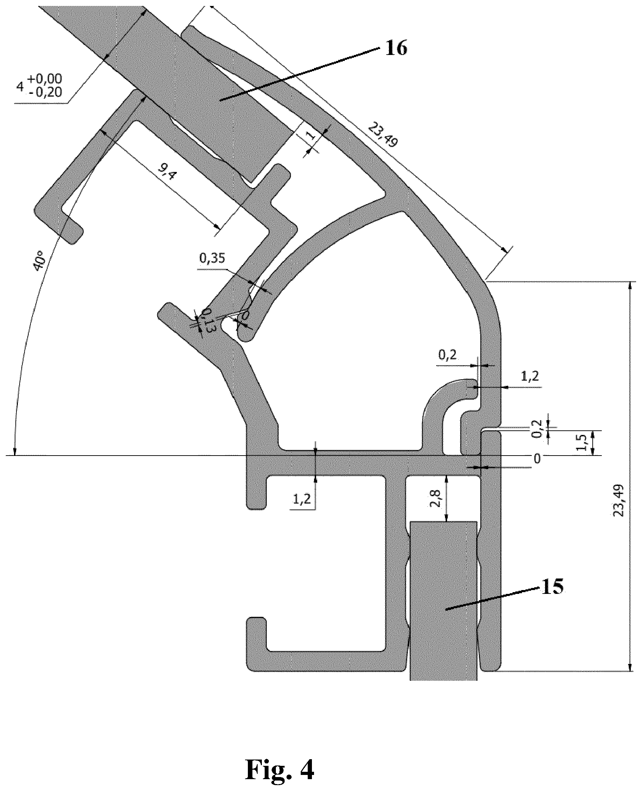

Fig. 4 shows an example of a specific design implementation, including dimensions, where it is also possible to see how the roof and wall panel elements (15, 16) are integrated into the profile (1). The wall panel part (16) is fastened in the wall panel cavity (10), and the roof panel part (16) is fastened in the roof panel cavity (9). It is also shown that the wall panel part (15) is pushed into the wall panel cavity (10), which is wholly formed in the base element (3). However, the roof panel part (16) is inserted up to the roof panel stop (8) into the roof panel cavity (9), which is formed by the base element (3) on one side and the fastening component (2) on the other side while snap-fitting. It means that the roof panel cavity (9) is formed only when the base element (3) and the fastening component (2) are interconnected.

Each part of this profile (1) is further described in more detail from a functional point of view.

The shape of the housing of the base element (4) enables an optimal adaptation to the connection between the roof and the wall of the greenhouse. The housing of the base element (4) has the following functions:
Structural support: The housing of the base element (4) is the structural part that supports the entire profile structure, ensuring that the profile can withstand various mechanical loads.
Tightness: Due to its shape and design, the housing of the base element (4) contributes to the tightness of the greenhouse by reducing heat loss and preventing unwanted air and moisture ingress. Connection: The housing of the base element (4) is specially shaped to form a suitable connection between the wall and the roof of the greenhouse. This connection is essential to prevent loss of tightness and weakening of the structure.
Ease of installation: Ease of installation has been considered in the design of the housing of the base element (4). Its design facilitates seamless and quick integration into the greenhouse structure (from the inside), thus reducing installation time and costs.

The housing of the base element (4) forms the basis on which the other system parts are mounted. It ensures that the whole system functions as a unit, ensuring the necessary stability and reliability of the greenhouse.

The locking knurl (5) is an essential part of the structure of the invention profile (1), which is incorporated in the housing of the base element (4) and performs several critical functional tasks:
Locking: As the name implies, the locking knurl (5) is intended to ensure that the fastening component (2) is securely and firmly connected to the base element (3) by the locking leg (12). This part (5) acts as a mechanical lock which prevents the fastening component (2) from accidentally separating from the base element (3).
Mechanical stabilisation: The locking knurl (5) provides additional mechanical stabilisation of the entire interconnection of the profile (1). It helps to keep the connector strong even under heavy external loads such as wind, rain and snow, which can affect the greenhouse structure.
Tightness support: In addition to structural stabilisation, the locking knurl (5) also contributes to the tightness of the entire interconnection. It helps to ensure that no gaps occur between the base element (3) and the fastening component (2), which could leak moisture or cold air, thus maintaining optimal conditions in the greenhouse.

This part (5) is necessary to ensure a safe, reliable and efficient connection between the base element (3) and the fastening component (2), ensuring the functionality and durability of the entire structure of the greenhouse profile (1).

The attachment hook (6) is also essential to the invention profile (1). It is attached to the base element (3) and performs several functions:
Attachment: The attachment hook (6) ensures the attachment of the fastening component (2) to the base element (3) using the attachment leg (13). It acts as a mechanical interface that holds the fastening component (2) within the base element (3), ensuring the compatibility and stability of the two parts.
Mechanical resistance: This hook (6) provides additional mechanical resistance to help maintain the integrity of the entire connection system.
Ease of installation: The attachment hook (6) enables a quick and efficient connection between the base element (3) and the fastening component (2). Its design also facilitates installation, allowing for quick assembly or disassembly of the greenhouse parts in the cases of maintenance or modification.

Besides its functions, the attachment hook (6) is also necessary to ensure the greenhouse profile's structural reliability and durability (1).

The stop of the attachment leg (7) is another critical part of the invention profile (1). It is attached to the base element (3) and performs several critical functions:
Positioning accuracy: The stop of the attachment leg (7) ensures that the attachment leg (13) is positioned exactly where it is needed. This is essential to ensure that the fastening component (2) is correctly and securely attached to the base element (3) without unwanted displacement or deflection.
Maintaining stability: This stop (7) not only helps to maintain the inter-orientation of the components but also contributes to the overall stability of the structure. It acts as a physical barrier to prevent movement or displacement of the attachment leg (13), which is particularly important under external dynamic loads.
Ease of installation: The stop of the attachment leg (7) is designed to allow installers to quickly and easily determine the correct position during the connection between the base member (3) and the fastening component (2), reducing the likelihood of installation errors.
Mechanical security: The stop (7) also protects the attachment leg (13) from possible external mechanical influences such as impact or abrasion. This ensures a longer useful life for the whole system.

The stop of the attachment leg (7) is a critical component to ensure accurate and reliable assembly of the greenhouse profile (1) structure and contributes to the overall efficiency and functionality of the greenhouse.

The roof panel stop (8) is an integral part of the structure of the invention profile (1), incorporated in the base member (3), which performs the following functions:
Limiting and positioning: The roof panel stop (8) is designed to limit and target the positioning of the roof panel (16) during installation. It ensures that the roof panel (16) is inserted correctly with the base element (3), ensuring an optimum combination and tightness.
Mechanical stability: This stop (8) not only helps to guide the roof panel (16) during installation but also provides additional mechanical stability. Its design reduces the movement and vibration of the roof panel (16) by resisting these external influences.

Protection against the wrong installation: The roof panel stop (8) acts as a safety device against the wrong installation of the roof panel (16), i.e. the incorrect insertion depth. This helps to ensure the tightness of the greenhouse.

Simple and easy installation: Owing to its well-defined design, the roof panel stop (8) facilitates installation, allowing installers to mount the roof panels (16) faster and more efficiently, saving time and avoiding errors during installation.

The roof panel stop (8) is necessary to ensure the correct installation of the roof panel (16) and the long-term reliability of the greenhouse. It not only helps to maintain the structural integrity but also contributes to the overall efficiency and sustainability of the greenhouse.

The roof panel cavity (9) is designed to receive and house the roof panel (16) in the correct position.

The wall panel cavity (10) similarly receives and houses the wall panel (15) in the correct position.

The main functions of the housing fastening component (11) are as follows:
Structural robustness: The housing of the fastening component (2) is the critical part that ensures the structural integrity of the entire fastening component (2). It creates a mechanical frame which incorporates other parts of the fastening component (2), such as the attachment leg (13), the locking leg (12), and the roof panel support leg (14).
Interaction with the base element (2): The said housing (11) must be aligned to match the structural architecture of the base element exactly (3). This enables the tight and stable connection between the base element (3) and the fastening component (2).

Execution of the locking function: The housing (11) of the attachment component is the part that ensures the locking function of the structure, including the locking leg (12) and the attachment leg (13).

Security: The housing of the fastening component (11) also protects the greenhouse from environmental influences such as moisture or dust.

Ease of installation: The design of the housing of the fastening component (11) is inspired by installation efficiency. Therefore, installing or replacing the fastening component is easy and quick.

The said housing (11) is necessary to ensure the functionality of the entire fastening component (2).

The locking leg (12) is one of the most essential elements of the whole structure of the present invention. It has the following functions:
Locking: The locking leg (12) is the critical element to ensure that the fastening component (2) is firmly attached to the base element (3). It (12) works as a mechanical key that is activated by the insertion and locking of the said locking leg (12) through the locking knurl (5) in the base element (3).

Vibration and movement control: This locking leg (12) stabilises the connection, reduces vibration and prevents the fastening component (2) from moving or slipping during the greenhouse use. This is particularly important in high winds or under other dynamic loads.

Extra tightness: The locking leg (12) also contributes to the tightness of the connection. Its shape and the way it fits into the base element (3) helps to block potential air leakages, thus improving the control of the greenhouse microclimate.

Simple actuation and release: While the locking leg (12) is safe and secure, it is also designed to be easily locked and released if necessary. This enables a quick assembly or disassembly of the connection in cases of possible modifications, upgrades, relocations or routine dismantling tasks.

Long-term reliability: The locking leg (12) is made of robust materials that are corrosion-resistant and withstand other environmental influences, ensuring that it remains effective and reliable for a long time.

This locking leg (12) is an integral part of the invention. It ensures a practical and secure connection between the fastening component (2) and the base element (3), providing stability, robustness, and functionality to the greenhouse structure.

The attachment leg (13) is another essential element of the fastening component (2), which performs the following vital functions in the construction of the greenhouse profile (1):
Attachment and stabilisation: The attachment leg (13) is designed to ensure that the fastening component (2) is firmly attached to the base element (3). It (13) works as a mechanical interface, where the fastening component (2) is snapped-fit and held in a fixed position to help maintain the integrity of the entire structure.
Mechanical resistance: The attachment leg (13) also contributes to the improved mechanical resistance of the entire system.
Quick and easy installation: Its (13) design allows for easy and quick installation or dismantling. This is particularly useful for regular maintenance or other greenhouse-related work/repairs.
Tightness support: The attachment leg (13) also contributes to the tightness of the entire connection, reducing the possibility of air or water penetration inside the greenhouse.

The attachment leg (13) is an essential part of the greenhouse profile (1) structure and significantly contributes to its functionality, robustness, safety and durability.

The roof panel support leg (14) is a unique element that adds additional features to the system. This leg (14) has the following functions:
Fixation of the roof panel: The roof panel support leg (14) is designed to fix and hold the roof panel (16) in position. It helps keep the roof panel (16) constantly pressed against the base element (3), ensuring that the panel cannot move or slip due to an external factor.
Increased stability: The design of the support leg (14) effectively reduces the movement and vibration of the roof panel (16) that may occur due to strong wind, rain, or other environmental influences.
Mechanical protection: This leg (14) supports the roof panel (16) and protects it from mechanical damage during installation or operation. Tightness: The roof panel support leg (14) contributes to the tightness of the greenhouse in addition to stability. It ensures that there are no gaps between the roof panel (16) and the profile joints that could allow air or water to penetrate.
Easy installation and maintenance: This leg's (14) design (gentle upward bending) allows for quick and efficient installation and removal of the roof panel (especially during installation), facilitating maintenance or replacement work when required.

The roof panel support leg (14) is not a critical part of the structure but provides very beneficial features.

The roof and wall panels (15, 16) are not directly involved in constructing the profile (1) of the present invention. Still, we have shown them specifically in Fig. 4 to provide a visual and more precise understanding of how the profile works and its benefits for professionals in the field.

Many plastic profiles and structures are widely used in greenhouse construction worldwide because they are lightweight and low-cost. However, experiments and practical experiences have shown that plastic profiles cannot always provide structural durability and stability, especially in the long term. Therefore, to add further robustness and stability to the structure of the present invention, the said profiles (1) can be made of metal. One of the metal options could be aluminium, which is lightweight but extremely strong and corrosion-resistant. This is essential in greenhouse environments where humidity and metal-aggressive conditions can be severe. Aluminium profiles can be recycled and easily combined with other metals or materials for additional structural strength and sustainability. The metal profiles (1) of the present invention, in particular those made of aluminium, not only increase the stability and durability of the greenhouse structure but also reduce the need for frequent repair or replacement of the structural parts that may be subject to wear and tear. At the same time, using aluminium allows for resource efficiency and a reduction of the greenhouse environmental impact while it is a recyclable and durable material.

The dimensions and parameters of the profile, or their ratios, may also differ depending on the parameters of the particular greenhouse.

To illustrate and describe this invention, a description of the most suitable implementation options is provided above. It is not intended to be a definitive or limiting description for a precise form or implementation option. Therefore, it should be seen as an illustration rather than a limitation. Professionals in the field may explore many different modifications and variations. These implementation options are provided to give professionals in the field a better understanding of the principles of the invention and the most practical ways to use them for various implementation options with different modifications suitable in various scenarios. The scope of the invention is defined by the appended claims and their equivalents, in which all the terms mentioned above have the broadest possible meaning unless otherwise specified. The implementation options described by the professionals in the field may include modifications that still fall within the scope of the present invention as defined below.

## Claims

1. The structure of a greenhouse profile (1), designed to connect the greenhouse walls to the roof,
comprising:
integrated fastening sealing,
**characterized in that:**
the base element (3) fixed inside the greenhouse and creating the connection zone, and
the fastening component (2) on the outside of the greenhouse,
which is connected to the base element (3) by a snap-fit principle, ensuring a quick and firm connection and good structural stability and tightness.

2. The structure of the greenhouse profile (1), according to Claim 1, **characterized in that** the base element (3) comprising:
the locking knurl (5);
the attachment hook (6); and
the stop of the attachment leg (7);
wherein:
the locking knurl (5) is designed to ensure that the fastening component (2) is securely and firmly connected to the base element (3) using the locking leg (12); this part (5) works as a mechanical lock that prevents the fastening component (2) from being accidentally detached from the base element (3);
the attachment hook (6) is the element that ensures the attachment of the fastening component (2) to the base element (3) using the attachment leg (13); this part (6) works as a mechanical interface that holds the fastening component (2) within the composition of the base element (3), thus ensuring compatibility and stability of the two parts (2, 3);
the stop of the attachment leg (7) ensures that the attachment leg (13) is positioned precisely in the required position, which is essential to ensure that the fastening component (2) is correctly and securely attached to the base element (3) without unwanted displacement or deflection.

3. The structure of the greenhouse profile (1), according to Claim 2, **characterized in that** the base element (3) further comprising:
the roof panel stop (8),
wherein:
the said roof panel stop (8) is an integral part of the structure of the invention profile (1), incorporated in the base element (3), which aims at limiting and positioning the roof panel (16) in a targeted manner during installation, i.e. ensuring that the roof panel (16) is placed in the correct position to the base element (3), thus guaranteeing the optimum robustness and tightness of the glasshouse.

4. The structure of the greenhouse profile (1), according to Claim 1, **characterized in that** the fastening component (2) comprising:
the locking leg (12); and
the attachment leg (13);
wherein:
the locking leg (12) is the crucial element to ensure that the fastening component (2) is firmly attached to the base element (3); this part (12) works as a mechanical key which is activated by the insertion and locking of the aforementioned locking leg (12) through the locking knurl (5) in the base element (3);
the attachment leg (13) is designed to ensure that the fastening component (2) is firmly and securely attached to the base element (3); this part (13) acts as a mechanical interface by which the fastening component (2) is snapped-fit and held in a fixed position, helping to preserve the integrity of the entire structure.

5. The structure of the greenhouse profile (1), according to Claim 4, **characterized in that** the fastening component (2) further comprising:
roof panel support leg (14);
wherein:
the said roof panel support leg (14) is designed to fix and hold the roof panel (16) in position; it (14) helps to keep the roof panel (16) constantly pressed against the base element (3), ensuring that the panel cannot move or slip due to some external influence.

6. The structure of the greenhouse profile (1), according to any preceding Claims, **characterized in that** is being entirely or partly made of metal.

7. The structure of the greenhouse profile (1), according to Claim 6, **characterized in that** the metal being aluminium.
